# EUROPÄISCHE PATENTSCHRIFT

(11) **EP 1 390 911 B1**
(45) Veröffentlichungstag und Bekanntmachung des Hinweises auf die Patenterteilung: **11.04.2007**
(21) Anmeldenummer: 00958200.8
(22) Anmeldetag: 01.08.2000
(51) Int. Cl.: G06K 19/077, G06K 19/04

(54) **IDENTIFIKATIONSKARTE**
IDENTIFICATION CARD
CARTE D'IDENTIFICATION

(30) Priorität: 17.08.1999 DE 19939003
(43) Veröffentlichungstag der Anmeldung: 25.02.2004
(73) Patentinhaber: Sagem Orga GmbH, 33106 Paderborn (DE)
(72) Erfinder: HAMMER, Asmus, D-24159 Kiel (DE)
(86) Internationale Anmeldenummer: PCT/DE2000/002560
(87) Internationale Veröffentlichungsnummer: WO 2001/013331

(56) Entgegenhaltungen:
- CH-A- 689 680
- PATENT ABSTRACTS OF JAPAN vol. 014, no. 536 (M-1052), 27. November 1990 (1990-11-27) & JP 02 227239 A (OMRON TATEISI ELECTRON CO), 10. September 1990 (1990-09-10)

## Beschreibung

Gegenstand der Erfindung ist eine in Spritzgusstechnik hergestellte Identifikationskarte mit mindestens einem zur Beschriftung der Identifikationskarte mittels Hochprägetechnik räumlich auf der Identifikationskarte definierten Feld wobei hierbei mindestens ein Teilbereich des bzw. der Felder zur Beschriftung der ldentifikationskarte mit einer über das Oberflächenniveau der Identifikationskarte vorspringenden Erhebung versehen sind, so daß die Gesamtdicke der Identifikationskarte in dem erhabenen Teilbereich erheblich größer ist als die Dicke der übrigen Bereiche der Identifikationskarte.

Die Lage des bzw. der Felder, in die hochgeprägte Zahlen oder Buchstaben mittels eines Prägestempels eingestanzt werden, so daß sich auf der Vorderseite der Identifikationskarte eine Buchstaben- oder Zahlenerhöhung sowie auf der Rückseite der Karte eine korrespondierende Vertiefung ergibt, ist in der Standard-ISO 7811 "Identifikation Cards - Recording Technics" spezifiziert. Neben der Einprägung von Zahlen und Buchstaben können die Identifikationskarten neuerer Art natürlich auch einen Magnetstreifen und/oder einen IC-Chip aufnehmen, wie es beispielsweise von Telefonkarten bekannt ist.

Darüber hinaus ist aus der CH 689 680 A ein Datenträger bekannt, der in Form einer Identifikationskarte ausgebildet ist, und der einseitig Erhebungen aufweist, die die Form von Buchstaben besitzen, wobei die Gesamtdicke des Datenträger in dem Bereich der Buchstaben größer ist als die Dicke des übrigen Datenträgers.

Zum Stand der Technik wird ergänzend darauf verwiesen, dass aus der JP 010 48774 ein Kartenkörper bekannt ist, auf den mittels ultravioletter Strahlung Erhebungen aus Kunstharz aufgebracht werden.

Die immer umfangreicherer Verbreitung und die in jüngerer Zeit stark angestiegene Vielfalt der Verwendungsmöglichkeiten von Identifikationskarten macht es u. U. erforderlich, neben den bislang üblichen integrierten Speicher- oder Rechnerchips zusätzliche elektronische Bauteile zur Erweiterung der Verwendungsmöglichkeiten auf den Identifizierungskarten zu plazieren. Hierbei sind bislang den verwendeten elektronischen Bausteinen aufgrund der Dicke der Identifikationskarten von maximal 0,8 mm bauliche Grenzen gesetzt.

Aufgabe der vorliegenden Erfindung ist es, eine Identifikationskarte der gattungsgemäßen Art so weiterzuentwickeln, daß auf ihr zusätzliche elektronische Bauelemente angeordnet werden können und daß somit die Verwendungsvielfalt derartiger gattungsgemäßer Karten zusätzlich erweitert wird.

Diese Aufgabe wird zusammen mit den gattungsbildenden Merkmalen durch die technische Lehre des kennzeichnenden Teils des Anspruches 1 gelöst. Gemäß der Erfindung werden in der Erhebung des oder der vordefinierten Felder elektronische Bauelemente, vorzugsweise Batterien, Sensoren, LCD-Displays oder zusätzliche integrierte Schaltkreise angeordnet. Ein Teilbereich der Identifikationskarte ist somit mit einer Materialanhäufung versehen, die zum einen keine Beeinträchtigung der herkömmlichen Verwendung derartiger Karten mit sich bringt, da in dem angesprochenen Bereich bereits seit langem entsprechende Buchstaben und Zahlen mittels Hochprägetechnik aufgebracht werden. Vielmehr eröffnet die Materialanhäufung in den definierten Teilbereichen die Möglichkeit, in diesen erheblich dickeren Bereichen der Identifikationskarten zusätzliche elektronische Bauteile unterzubringen, die in den Kartenbereichen mit herkömmlicher Dicke von 0,8 mm nicht untergebracht werden könnten.

Es kann zweckdienlich sein, den gesamten Bereich der vordefinierten Felder mit einer entsprechenden Erhebung zu versehen, wobei die Erhebung selbst eine Dicke von 0,5 mm aufweist, so daß sich eine maximal nutzbare Gesamtdicke der Karte von nunmehr 1,3 mm ergibt, was eine Steigerung gegenüber der Dicke herkömmlicher Identifikationskarten von über 60% ausmacht.

Die Bauelemente lassen sich dort eingießen oder man sieht speziell angepaßte Vertiefungen für die Bauelemente vor, in welche diese eingeklebt werden. Bei der Gestaltung der Vertiefungen ist nur darauf zu achten, daß seitlich und im Bodenbereich der Vertiefungen genügend Material verbleibt, so daß eine Schwächung des Kartenkörpers unterbleibt. Solange diese Rahmenbedingungen erfüllt sind, lassen sich runde oder eckige Bauelemente zusätzlich auf der Identifikationskarte anordnen, indem diese beispielsweise in die in die Karte eingefrästen Vertiefungen eingeklebt werden. Die Verdrahtung der Bauteile untereinander erfolgt hierbei analog zu den heute bereits hergestellten sogenannten Chipkarten, beispielsweise mit Hilfe von mit Leiterbahnen versehenen Folien.

Im Folgenden wird ein Ausgestaltungsbeispiel des Gegenstandes der Erfindung anhand der beigefügten Zeichnungen näher erläutert. Es zeigt:
- Figur 1: eine Draufsicht in perspektivischer Darstellung auf eine erfindungsgemäße Identifikationskarte,
- Figur 2: eine Schnittdarstellung entlang der Linie B-B aus Figur 1,
- Figur 3: eine perspektivische Darstellung der erfindungsgemäßen Identifikationskarte mit Ausnehmungen für elektronische Bauelemente und
- Figur 4: eine schematische Schnittdarstellung entlang der Linie C-C aus Figur 3.

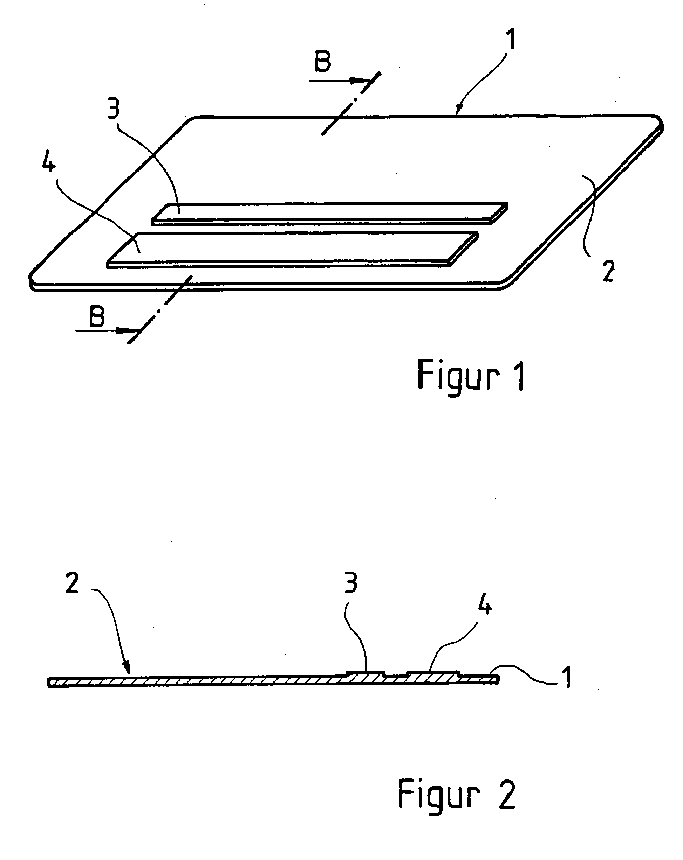

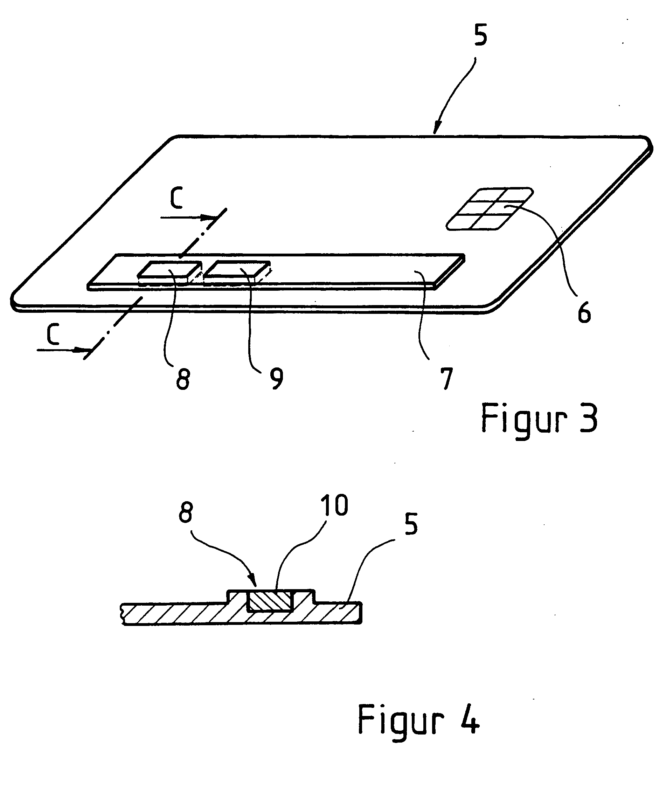

In Figur 1 ist eine in ihrer Gesamtheit mit 1 bezeichnete Identifikationskarte mit Draufsicht auf ihre Oberseite 2 dargestellt. Es ist deutlich zu erkennen, daß auf der Oberseite 2 der Identifikationskarte 1 zwei Bereiche 3 und 4 definiert sind, deren Lage auf der Karte in der ISO 7811 festgelegt sind. Hierbei ist das Feld 3 üblicherweise für die Aufbringung von Buchstaben und Zahlen der Kartenildentifikationsnummer reserviert, durch welche der Kartenausgeber sowie der Karteninhaber festgelegt sind. Der Bereich 4 ist für zusätzliche Daten des Karteninhabers vorgesehen, beispielsweise den Namen und die Adresse. Aus der Figur 1 ist deutlich zu ersehen, daß die erfindungsgemäße Identifikationskarte 1 in diesen Bereichen 3 und 4 über das Oberflächenniveau der Identifikationskarte 1 vorspringenden durchgehende Erhebungen aufweist. Diese Erhebungen besitzen im wesentlichen eine quaderförmige Gestalt und ragen maximal 0,5 mm über die Kartenoberfläche 2 heraus. Somit ergibt sich eine Gesamtdicke der Identifikationskarte in den Bereichen 3 und 4 von insgesamt 1,3 mm. Die Herstellung der Erhebungen in den Bereichen 3 und 4 erfolgt im Rahmen des Spritzgießprozesses in einem Schritt mit der Herstellung der übrigen Karte. Die Figur 2 macht in diesem Zusammenhang noch mal deutlich, daß der eigentliche Kartenkörper und die Erhebungen einstückig ausgeführt sind. Da die Kartendicke in den Bereichen 3 und 4 ungefähr 60% größer als in den übrigen Bereichen der Identifikationskarte ist, lassen sich hier in einem weiteren Arbeitsschritt Ausnehmungen einfräsen, in welche zusätzliche Bauteile einsetzbar sind. In der Figur 3 ist in Abwandlung der Figur 1 eine Chipkarte 5 dargestellt, die mit einem integrierten Speicherchip sowie einem Feld 6 zur kontaktbehafteten oder kontaktlosen Datenübertragung versehen ist. Der IC-Baustein befindet sich in der Zeichnungsansicht unsichtbar unterhalb des Kontaktfeldes 6. Neben diesem Kontaktfeld 6 ist an der Oberseite der Chipkarte 5 eine Erhebung 7 angeordnet, deren Lage derjenigen des Feldes 4 der Identifikationskarte aus Figur 1 entspricht. Die Erhebung 7 bedeckt den gesamten Grundriß des Feldes und besitzt zwei Vertiefungen 8 und 9, in die zusätzliche elektronische Bauelemente wie beispielsweise eine Batterie oder ein zusätzlicher integrierter Schaltkreis, ein Sensor oder ein LCD-Display eingeklebt werden können. Der Verwendung der zusätzlichen elektronischen Bauelemente sind nur insofern Grenzen gesetzt, als daß sie in ihrer Größe innerhalb der Erhebung 7 verbleiben müssen.

In der Figur 4 ist ein Querschnitt durch die Chipkarte 5 entlang der Linie CC aus Figur 3 dargestellt. Deutlich werden noch einmal die Verhältnisse zwischen normaler Chipkartendicke von 0,8 mm und der zusätzlichen Erhöhung im Bereich der Erhebung 7. Durch die erfindungsgemäße Gestaltung lassen sich selbst Bauteile in die ldentifikationskarte einfügen, die eine Dicke von mehr als 0,8 mm aufweisen und somit über die Oberfläche herkömmlicher Chipkarten hervorstehen würden. In der Figur 4 ist in die Ausnehmung 8 eine Batterie 10 eingesetzt oder eingeklebt, deren Anschlüsse aus Gründen der Übersichtlichkeit nicht mehr dargestellt sind und darüber hinaus bereits aus dem Stand der Technik als bekannt vorausgesetzt werden dürfen.

## Patentansprüche

1. In Spritzgußtechnik hergestellte Identifikationskarte (1) mit mindestens einem zur Beschriftung der Identifikationskarte (1) mittels Hochprägetechnik räumlich auf der Identifikationskarte definierten Feld (3,4), wobei die Definition der Lage jedes Feldes gemäß eines internationalen Standards, derzeit ISO/IEC 7811-3, dokumentiert ist, und wobei mindestens ein Teilbereich des Feldes (3,4) eine über das Oberflächenniveau der Identifikationskarte (1) vorspringende Erhebung aufweist, so daß die Gesamtdicke der ldentifikationskarte in dem erhabenen Teilbereich erheblich größer ist als die Dicke der übrigen Bereiche der Identifikationskarte, **dadurch gekennzeichnet, daß** innerhalb des mit der vorspringenden Erhebung versehenen Bereiches des Feldes (3,4) elektronische Bauelemente (10), vorzugsweise Batterien, Sensoren, LCD-Displays oder integrierte Schaltkreise, angeordnet sind.

2. Identifikationskarte nach Anspruch 1, **dadurch gekennzeichnet, daß** die innerhalb des mit der vorspringenden Erhebung versehenen Bereiches des Feldes (3,4) angeordneten elektronische Bauelemente (10), sich in dafür ausgesparten Vertiefungen (8,9) für deren Einbau befinden.

3. Identifikationskarte nach Anspruch 1 oder 2, **dadurch gekennzeichnet, daß** die Erhebung eine Dicke von 0,5 mm aufweist.

4. Verfahren zur Herstellung einer Identifikationskarte nach einem der Ansprüche 1 bis 3, **gekennzeichnet durch**
- eine Bereitstellung der Spritzgußform, wobei eine Hälfte der Spritzgußform eine Vertiefung zur Ausbildung der Erhebung aufweist,
- ein Einspritzen des Kunststoffmaterials und
- die Entformung/ die Entnahme des Identifikationskartenkörpers.

## Claims

1. Injection-molded identification card (1) having at least one field (3, 4) which is spatially defined on the identification card by means of a relief embossing technique for inscribing the identification card (1), wherein the definition of the position of each field is documented in accordance with an international standard, currently ISO/IEC 7811-3, and wherein at least one partial area of the field (3, 4) has an elevation that protrudes above the surface level of the identification card (1) in such a way that the overall thickness of the identification card is much greater in the raised partial area than the thickness of the remaining areas of the identification card, **characterized in that** electronic components (10), preferably batteries, sensors, LCD displays or integrated circuits, are arranged within the area of the field (3, 4) provided with the protruding elevation.

2. Identification card according to Claim 1, **characterized in that** the electronic components (10) arranged within the areas of the field (3, 4) provided with the protruding elevation are located in the recesses (8, 9) cut out for their insertion.

3. Identification card according to Claim 1 or 2, **characterized in that** the elevation has a thickness of 0.5 mm.

4. Method for producing an identification card according to one of Claims 1 to 3, **characterized by**
- provision of the die mold, wherein one half of the die mold contains a recess for forming the elevation,
- injection of the plastic material, and
- opening the mold/removal of the identification card body.

## Revendications

1. Carte d'identification (1) fabriquée selon la technique de moulage par injection, avec au moins un champ (3, 4) défini spatialement sur la carte d'identification au moyen de la technique d'estampage en relief, la définition de la position de chaque champ étant documentée selon un standard international, actuellement ISO/IEC 7811-3, et au moins un domaine partiel du champ (3, 4) présentant une surélévation qui fait saillie au-dessus du niveau de la surface de la carte d'identification (1), de sorte que l'épaisseur globale de la carte d'identification est considérablement plus grande dans le domaine partiel en relief que l'épaisseur des autres domaines de la carte d'identification, **caractérisée en ce que,** qu'au sein du domaine du champ (3, 4) pourvue d'une surélévation, sont disposés des composants électroniques (10), qui sont préférentiellement des batteries, des capteurs, des écrans LCD ou des circuits de commutation intégrés.

2. Carte d'identification selon la revendication 1, **caractérisée en ce que** les composants électroniques (10), disposés dans le domaine du champ (3, 4) pourvu de la surélévation, sont situés, lors de leur montage, dans des cavités (8, 9) évidées dans ce but.

3. Carte d'identification selon revendication 1 ou 2, **caractérisée en ce que** la surélévation présente une épaisseur de 0,5 mm.

4. Procédé pour la fabrication d'une carte d'identification selon l'une des revendications 1 à 3, **caractérisé par**
- la réalisation d'un moule, une moitié dudit moule présentant une cavité pour la formation de la surélévation,
- l'injection de la matière synthétique et
- le démoulage / l'enlèvement du corps de carte d'identification
